Europäisches Patentamt

European Patent Office

Office européen des brevets

(19)

(11) Numéro de publication: **0 036 793**
**B1**

(12) **FASCICULE DE BREVET EUROPEEN**

(45) Date de publication du fascicule du brevet: **04.01.84**

(51) Int. Cl.³: **B 01 D 23/20**

(21) Numéro de dépôt: **81400324.0**

(22) Date de dépôt: **03.03.81**

(54) Dispositif pour la distribution de l'eau sur un filtre à remplissage de matériaux granulaires et la reprise de l'eau de lavage dudit filtre.

(30) Priorité: **26.03.80 FR 8006665**

(43) Date de publication de la demande:
**30.09.81 Bulletin 81/39**

(45) Mention de la délivrance du brevet:
**04.01.84 Bulletin 84/1**

(84) Etats contractants désignés:
**BE CH DE GB IT LI**

(56) Documents cités:
**FR - A - 1 011 221**
**FR - A - 1 064 129**
**US - A - 1 465 968**
**US - A - 3 613 888**
**US - A - 4 118 320**
**US - A - 4 118 322**

(73) Titulaire: **"DEGREMONT" Société dite:**
**183, Avenue du 18 Juin 1940**
**F-92508 Rueil-Malmaison Cédex (FR)**

(72) Inventeur: **Louboutin, Robert**
**La Duche Route des Flambertins**
**F-78121 Crespieres (FR)**

(74) Mandataire: **Armengaud, Charles**
**Cabinet ARMENGAUD AINE 3, Avenue Bugeaud**
**F-75116 Paris (FR)**

Courier Press, Leamington Spa, England.

## Dispositif pour la distribution de l'eau sur un filtre à remplissage de matériaux granulaires et la reprise de l'eau de lavage dudit filtre

La présente invention concerne un dispositif pour la distribution de l'eau sur des filtres à remplissage de matériaux granulaires utilisés en traitement des eaux de toute nature et la reprise de l'eau de lavage des dits filtres; elle s'applique particulièrement aux filtres comportant au moins une couche de matériaux filtrants granulaires dont au moins un des matériaux est de faible masse volumique et constitué par exemple par des charbons traités—tel que l'anthracite traité—du charbon actif, de la pierre ponce, de l'argile expansée, etc.

De tels filtres sont bien connus et se présentent sous forme d'une cuve parallélépipédique comportant un plancher équipé de buses de drainage et destiné à supporter le ou les matériaux filtrants. L'eau à filtrer est distribuée par un moyen quelconque au-dessus de la masse filtrante. La technique de lavage la plus efficace de ces filtres consiste à procéder, dans un premier temps, à un décolmatage par injection simultanée, à contre-courant, d'eau et d'air sous le plancher support de la masse filtrante, puis, dans un deuxième temps, à un rinçage à l'eau seule afin d'évacuer les impuretés détachées de la masse filtrante lors du décolmatage, dans une goulotte disposée sur toute la longueur du filtre et realiée à l'égout.

Cette technique de lavage, appliquée à un filtre dont le milieu filtrant est constitué par un matériau léger, anthracite traité par exemple, présente des difficultés. En effet, dans ce cas, l'anthracite traité ayant une masse volumique de l'ordre de 1 500 kg/m³—alors que celle du sable est de 2 500 kg/m³—il se produit, lors de la phase de décolmatage à l'eau et à l'air, un phénomène de flottation de la masse filtrante qui, lorsque le niveau de l'émulsion eau-air atteint le déversoir de la goulotte de reprise de l'eau de lavage, se trouve être évacuée à l'égout avec cette dernière.

Pour permettre le lavage simultané à l'eau et à l'air d'un tel matériau léger, deux solutions ont jusqu'à présent été proposées:

La première consiste à disposer le déversoir de la goulotte de reprise des eaux de lavage à une hauteur de 1,5 m à 2 m au-dessus de la masse filtrante. On procède alors, avant l'injection simultanée d'eau et d'air, à la vidange du filtre jusqu'à ce que le niveau de l'eau dans l'appareil corresponde sensiblement à celui de la masse filtrante, puis on réalise le décolmatage à l'eau et à l'air. Durant cette opération le niveau de l'eau dans le filtre s'élève jusqu'au niveau du déversoir de la goulotte de reprise d'eau de lavage. On stocke ainsi l'eau de lavage pendant la phase de décolmatage, sans qu'il y ait déversement de cette eau dans la goulotte. On purge le matelas d'air qui s'est constitué sous le plancher et l'on attend que la masse filtrante entrainée dans l'émulsion eau-air se décante; on procède alors au rinçage du filtre à l'eau seule et cette eau se déverse dans la goulotte disposée à la partie supérieure du filtre.

Cette solution présente des inconvénientes: en effet, le rinçage à l'eau seule, destiné à évacuer dans la goulotte les boues détachées du matériau filtrant nécessite, du fait de la position haute de cette goulotte, un débit d'eau très important; en outre sa durée est très longue avant d'obtenir une évacuation quasi complète des boues.

La seconde solution connue permet d'éviter ces inconvénients de la phase de rinçage à l'eau seule; elle consiste à procéder comme précédemment pendant la phase de décolmatage à l'eau et à l'air mais à réaliser, durant la phase de rinçage à l'eau seule, l'évacuation de l'eau de lavage par un clapet disposé sur toute la largeur du filtre, clapet qui est évidemment fermé pendant la phase précédente.

Cependant cette disposition présente d'autres inconvénients: Appliquée à un filtre industriel de dimensions classiques; longueur 10 m, largeur 4 m, elle nécessite un clapet à commande motorisée de 4 m de largeur et devient donc très onéreuse. En outre, pour un filtre de telles dimensions, la durée du rinçage à l'eau seule est augmentée considérablement, le trajet maximal de l'eau de rinçage étant dans ce cas de 10 mètres.

Le dispositif, objet de la présente invention, pallie ces inconvénients et ne nécessite aucun organe mécanique particulier. En outre, il permet de réaliser également la distribution de l'eau à filtrer, de façon homogène.

Le dispositif, objet de la présente invention, pour la distribution de l'eau sur un filtre à remplissage de matériaux granulaires et la reprise de l'eau de lavage du filtre après la phase de décolmatage dudit filtre à l'eau et à l'air, consistant en une goulotte accolée au filtre sur toute sa longueur et s'ouvrant vers le filtre par un déflecteur formant déversoir présentant deux plans inclinés en sens inverse formant bec vers l'intérieur du filtre, est caractérisé en ce que ladite goulotte est fermée à sa partie supérieure et maintenue sous pression hydrostatique pendant la phase de décolmatage du filtre à l'eau et à l'air.

La distribution de l'eau sur le filtre est réalisée par la goulotte à travers l'ouverture laissée par le déversoir, sur toute la longueur du filtre. La goulotte est ainsi ultérieurement maintenue pleine d'eau pendant la durée des opérations de décolmatage du filtre. La distribution d'eau par le dispositif suivant l'invention, disposé à une distance $h$ minimale de la couche filtrante, présente l'avantage de ne jamais provoquer, sous l'influence de la vitesse d'entrée dans le filtre, d'affouillements de la couche filtrante.

La description qui va suivre, d'une de ses formes possibles de réalisation, donnée uniquement à titre d'exemple non limitatif, permettra de bien comprendre l'invention. Cette description est faite en référence aux dessins annexés, sur le squels:

La figure 1 représente une vue détaillée en coupe transversale du dispositif suivant l'invention.

La figure 2 représente une vue en coupe transversale d'un filtre à remplissage de matériaux granulaires, muni du dispositif suivant l'invention.

La figure 3 représente une vue en coupe longitudinale de ce même filtre.

La figure 4 représente une vue en coupe transversale d'un filtre de grande largeur muni du dispositif suivant l'invention.

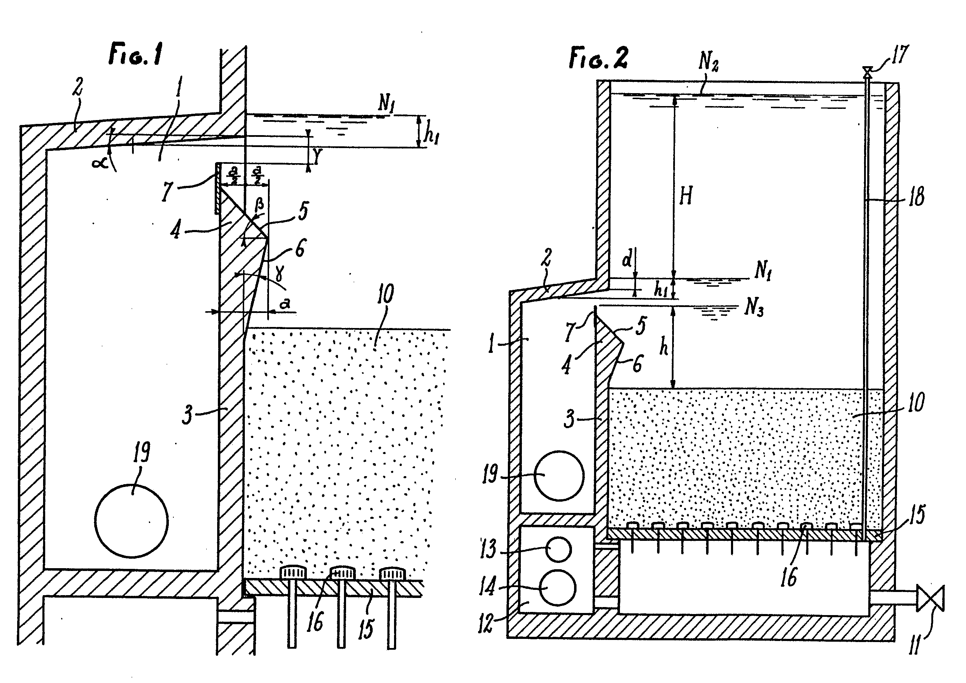

La figure 1 représente la goulotte 1 suivant l'invention, accolée au filtre 10 et fermée à sa partie supérieure par la paroi 2 inclinée sur l'horizontale d'un certain angle $\alpha$ de l'ordre de 5°, de telle sorte que le point haut de cette paroi se trouve du côté intérieure du filtre. La paroi verticale 3 de la goulotte s'élargit à sa partie supérieure, de façon à former un déversoir 4, présentant un plan 5 faisant saillie d'une quantité $a$ à l'intérieur du filtre, incliné d'un angle $\beta$ sur l'horizontale. $a$ est généralement compris entre 30 et 40 cm, et $\beta$ entre 35 et 45°. Ce plan incliné est raccordé à la paroi 3 de la goulotte 1, côté filtre, par un second plan incliné 6 formant avec la verticale un angle $\gamma$ de l'ordre de 15°. Le plan incliné 5 est disposé de telle sorte que sur la moitié $a/2$ de sa longueur, il se trouve sous la paroi supérieure 2 de la goulotte, la seconde moitié débordant à l'intérieur du filtre de façon à constitueur un bec pour le déflecteur formant déversoir. Ce plan incliné comporte à sa partie haute un écran vertical 7 fixé à l'intérieur de la goulotte, dont la position en hauteur peut être réglée. La distance $y$ entre la crête de cet écran et la paroi supérieure 2 de la goulotte est réglée de telle sorte qu'elle soit légèrement supérieure à la hauteur de la lame d'eau sur cet écran correspondant au débit d'eau maximal devant s'écouler dans la goulotte 1.

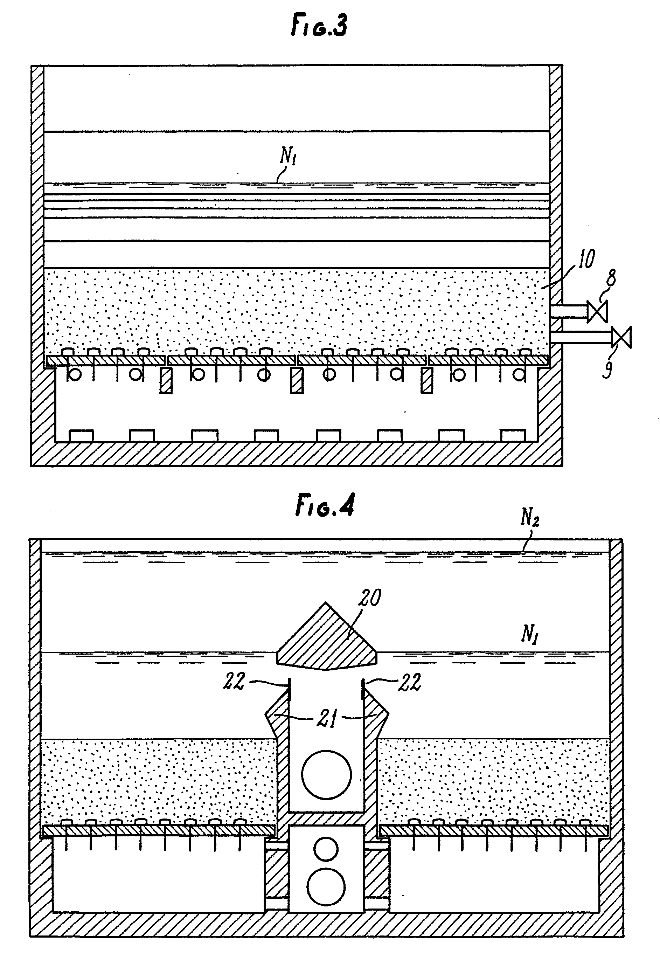

Les figures 2 et 3 représentent respectivement une vue en coupe et une vue longitudinale d'un filtre muni du dispositif suivant l'invention.

L'eau à filtrer est admise dans la goulotte 1 ou travers de la vanne ouverte 8, la vanne d'évacuation d'eau de lavage 9 étant fermée. Cette eau est distribuée sur la longueur du filtre par l'ouverture défine par la crête de l'écron vertical 7 et la paroi supérieure 2 de la goulotte. L'eau traverse la couche filtrante 10 et une fois filtrée, est recueillie au travers de la vanne 11. La fin du cycle de filtration étant atteinte, on doit procéder au lavage du matériau filtrant. La vanne d'admission d'eau à filtrer 8 est alors fermée. La vanne de sortie d'eau filtrée 11 est maintenue ouverte jusqu'à ce que l'eau soit descendue au niveau $N_1$. La vanne 11 est alors fermée, de telle sorte que la goulotte 1 soit maintenue pleine d'eau, et donc sous une pression hydrostatique moyenne correspondant à une colonne d'eau de hauteur $h_1$. On procéde alors à l'admission d'air puis d'eau de décolmatage dans le canal 12 au travers des deux orifices 13 et 14. De manière connue, l'air et l'eau pénètrent sous le plancher 15 support de la couche filtrante 10 et l'émulsion formée est distribuée dans cette couche au travers des buses 16. Le plan d'eau dans le filtre s'élève alors progressivement jusqu'à atteindre le niveau $N_2$ qui définit la fin de l'opération de décolmatage. Pendant toute cette opération, la goulotte 1 demeure sous pression, de telle sorte que la vanne d'évacuation d'eau de lavage étant fermée, aucun débit n'y transite. La vanne 17 est alors ouverte de façon à évacueur au travers de la tubulure 18 l'air qui s'est accumulé sous le plancher 15. Une partie du matériau filtrant léger ayant été entraînée dans l'espace défini par les niveaux $N_1$ et $N_2$, on observe une période d'attente pendant laquelle elle se redépose sur la couche filtrante, avant d'ouvrir la vanne 9 commandant l'évacuation d'eau de lavage de la goulotte 1 au travers de l'orifice 19.

Lorsque l'eau dans le filtre est descendue au niveau $N_3$ correspondant à la crête du déversoir 4, on procède au rinçage par envoi d'eau sous le plancher 15. Cette eau, après avoir traversé la masse filtrante 10, se déverse dans la goulotte 1 en entraînant les impuretés détachées du matériau filtrant au cours de l'opération précédente. La cote $h$ étant toujours supérieure à l'expansion prise par le matériau filtrant léger sous l'effet du débit ascendant d'eau de rinçage, il ne peut se produire, au cours de cette opération, d'entraînement de ce matériau dans la goulotte. Le rinçage terminé, on procède à la remise en service normal du filtre. Pour ce faire, l'arrivée d'eau de rinçage étant interrompue, la vanne 9 d'évacuation d'eau de lavage de la goulotte est fermée, tandis que sa vanne 8 d'alimentation en eau à filtrer est ouverte. Cette goulotte se remplit, et dès que l'eau atteint le niveau $N_3$ du déversoir, le filtre commence à être alimenté. Le niveau continue à monter dans la goulotte 1, et du fait de la pente de sa paroi supérieure, l'air qui s'y trouve est complètement évacué vers le filtre. Lorsque le niveau de l'eau dans ce dernier est au moins égal à $N_1$, la vanne de sortie d'eau filtrée 11 peut être ouverte.

Les opérations décrites ci-dessus peuvent avantageusement être automatisées grâce en particulier à l'utilisation de détecteurs automaqués des niveaux $N_1$ et $N_2$.

La goulotte 1 est, préalablement à l'opération de décolmatage, maintenue pleine d'eau et sous une légère pression hydrostatique $h_1$. Il s'ensuit que pendant l'opération de décolmatage, l'émulsion d'eau et d'air, après avoir traversé de bas en haut les matériaux filtrants, se trouve, le long de la paroi 3, défléchie par le profil 6 et la zone tourbillonnaire qui se crée à l'entrée de la goulotte ne s'étend pas au-delà de la moitié de la distance *a*. Du fait de l'absence de composante horizontale de vitesse, les grains de matériau léger entraînés par le mouvement tourbillonnaire viennent glisser sur le plan incliné 5 et retombent dans le filtre. On a bien observé après cette opération de décolmatage l'absence totale de grains de matériau filtrant léger dans la goulotte 1.

Par ailleurs, la valeur adoptée pour l'angle $\beta$ que fait le plan incliné 5 avec l'horizontale est telle que lors de la décantation des grains de matériau léger entraînés à la partie supérieure du filtre lors du décolmatage, ceux qui se déposent sur ce plan incliné retombent naturellement dans le filtre.

Lors d'une expérimentation réalisée sur un filtre équipé du dispositif objet de la présente invention, il a été trouvé une absence totale de perte de matériau filtrant lors de l'opération de décolmatage. Ce filtre était un filtre du type "bicouche" dont la masse filtrante était constituée d'une couche de 0,4 m de sable de taille effective 0,95 mm, surmontée d'une couche de 0,6 m d'Hydro-anthracite (dénomination commerciale d'un anthracite traité), de granulométrie comprise entre 1,4 et 2,5 mm.

La figure 4 représente un filtre de grande largeur muni du dispositif suivant l'invention. Dans ce cas, la goulotte 1, disposée suivant l'axe longitudinal du filtre, en son centre, est fermée à sa partie supérieure par une paroi 20 et comporte deux déflecteurs forment déversoir parallèles 21, présentant chacun un écran 22.

**Revendications**

1. Dispositif pour la distribution de l'eau sur un filtre à remplissage de matériaux granulaires et la reprise de l'eau de lavage du filtre après la phase de décolmatage dudit filtre à l'eau et à l'air, consistant en une goulotte accolée au filtre sur toute sa longueur et s'ouvrant vers le filtre par un déflecteur formant déversoir, présentant deux plans inclinés en sens inverse formant bec vers l'intérieure du filtre, caractérisé en ce que ladite goulotte (1) est fermée à sa partie supérieure et maintenue sous pression hydrostatique pendant la phase de décolmatage du filtre à l'eau et à l'air.

2. Dispositif suivant la revendication 1, caractérisé en ce que la goulotte est fermée à sa partie supérieure par au moins une paroi (2) inclinée sur l'horizontale telle que le point haut de cette paroi se trouve du côté du filtre, au-dessus du déversoir.

3. Dispositif suivant l'une quelconque des revendications précédentes, caractérisé en ce que la goulotte (1) est maintenue en pression hydrostatique par ouverture de l'admission (8) de l'eau à filtrer jusqu'à un niveau déterminé correspondant au remplissage de la goulotte par l'eau et fermeture de l'évacuation d'eau filtrée, pour conservation de ce niveau pendant les opérations de décolmatage à l'eau et à l'air.

4. Dispositif suivant l'une quelconque des revendications précédentes, caractérisé en ce que le plan incliné supérieur (5) du déflecteur formant déversoir a une longueur de 30 à 40 cm, dont la moitié au moins se trouve à l'intérieur du filtre.

5. Dispositif suivant l'une quelconque des revendications précédentes, caractérisé en ce que le plan incliné supérieur (5) du déflecteur formant déversoir fait un angle de 35 à 45° sur l'horizontale et le plan incliné inférieur (6) fait un angle de 15° environ avec la verticale et est raccordé à la paroi verticale de la goulotte.

6. Dispositif suivant l'une quelconque des revendications précédentes, caractérisé en ce qu'un écran (7) est disposé de façon réglable sur la paroi interne de la goulotte, cet écran faisant saillie sur le bec du déflecteur formant déversoir de toute quantité voulue.

**Patentansprüche**

1. Vorrichtung zum Verteilen von Wasser auf ein mit körnigem Material gefülltes Filter und zum Auffangen des Filterwaschwassers nach Reinigung des verstopften Filters mit Wasser und mit Luft, wobei die Vorrichtung aus einer an das Filter über ihre ganze Länge angebauten Einlaufrinne besteht, welche sich zum Filter hin über ein als Überlauf dienendes Leitblech öffnet, wobei unter Bildung eines Auslaufteils zum Inneren des Filters hin zwei in umgekehrter Richtung geneigte Ebenen vorhanden sind, dadurch Gekennzeichnet, daß die Einlaufrinne (1) im oberen Abschnitt geschlossen ist und während des Reinigungsvorgangs im Filter mit Wasser und Luft unter hydrostatischem Druck gehalten ist.

2. Vorrichtung nach Anspruch 1, dadurch Gekennzeichnet, daß die Einlaufrinne im oberen Abschnitt mittels mindestens einer zur Horizontalen in der Weise geneigten Wandung (2) geschlossen ist, daß der der obere Rand dieser Wandung neben dem Filter oberhalb des Auslaufteils liegt.

3. Vorrichtung nach einem der vorhergehenden Ansprüche, dadurch Gekennzeichnet, daß die Einlaufrinne (1) durch Öffnen des Zulaufs (8) für das zu filternde Wasser unter hydrostatischem Druck bis zu einer vorgegebenen Höhe gehalten ist, welche der Füllung der Einlaufrinne mit Wasser entspricht, sowie durch Schließen des Auslaufs für das gefilterte Wasser, so daß während des Reinigens des verstopften Filters mit Wasser und mit Luft diese Druckhöhe eingehalten ist.

4. Vorrichtung nach einem der vorhergehenden Ansprüche, dadurch Gekennzeichnet, daß die obere geneigte Ebene (5) des Leitblechs, welches als Überlauf fungiert, eine Länge von 30 bis 40 cm aufweist, wovon zumindest die Hälfte sich innerhalb des Filters befindet.

5. Vorrichtung nach einem der vorhergehenden Ansprüche, dadurch Gekenzeichnet, daß die obere geneigte Ebene (5) des Leitblechs, welches als Überlauf fungiert, gegenüber der Horizontalen einen Winkel von 35 bis 45° bildet, und daß die untere geneigte Ebene (6) gegenüber der Vertikalen in einem Winkel von rund 15° steht und mit der vertikalen Wandung der Einlaufrinne verbunden ist.

6. Vorrichtung nach einem der vorhergehenden Ansprüche, dadurch Gekennzeichnet, daß auf der Innenwandung der Einlaufrinne verstellbar ein Schirm (7) angeordnet ist, welcher über das Auslaufteil des als Überlauf dienenden Leitblechs um jeden gewünschten Betrag vorsteht.

## Claims

1. A device for the distribution of water on a filter filled with granular material and for the recovery of the washing water from the filter after the cleaning phase of said filter with water and air, comprising a chute attached to the filter along its whole length and opening toward the filter via a deflector forming a weir, having two planes inclined in reverse directions and forming a nose toward the inside of the filter, wherein said chute (1) is closed at its upper portion and kept under a hydrostatic pressure during the cleaning phase of the filter with water and air.

2. A device according to claim 1, wherein the chute is closed at its upper portion by at least one wall (2) inclined to the horizontal such that the high point of said wall is on the side of the filter, above the weir.

3. A device according to any one of the preceding claims, wherein the chute (1) is kept under hydrostatic pressure by opening the inlet (8) for the water to be filtered up to a determined level corresponding to the filling of the chute with the water and closing the discharge of the filtered water, for maintaining said level during the cleaning operations with water and air.

4. A device according to any one of the preceding claims, wherein the upper inclined plane (5) of the weir-forming deflector has a length from 30 to 40 cm, the half of which at least is inside the filter.

5. A device according to any one of the preceding claims, wherein the upper inclined plane (5) of the weir-forming deflector forms an angle of 35 to 45° to the horizontal and the lower inclined plane (6) forms an angle of 15° about to the vertical, and is connected to the chute vertical wall.

6. A device according to any one of the preceding claims, wherein a screen (7) is settably disposed on the chute inner wall, said screen protruding by any desired quantity above the nose of the weir-forming deflector.

Fig. 1

Fig. 2

# Fig.3

$N_1$

10

8

9

# Fig.4

$N_2$

20

$N_1$

22   22

21